Europäisches Patentamt

European Patent Office

Office européen des brevets

(19)

(11) Numéro de publication: **0 153 263**
**B1**

(12) **FASCICULE DE BREVET EUROPEEN**

(45) Date de publication du fascicule du brevet:
**07.12.88**

(51) Int. Cl.⁴: **E 05 B 49/00,** G 06 K 7/14

(21) Numéro de dépôt: **85440011.6**

(22) Date de dépôt: **20.02.85**

(54) **Serrure à codeurs optoélectroniques.**

(30) Priorité: **20.02.84 FR 8402719**

(43) Date de publication de la demande:
**28.08.85 Bulletin 85/35**

(45) Mention de la délivrance du brevet:
**07.12.88 Bulletin 88/49**

(84) Etats contractants désignés:
**DE**

(56) Documents cités:
**DE-A- 2 335 830**
**US-A- 2 953 689**
**US-A- 3 787 714**
**US-A- 3 838 395**
**US-A- 4 267 439**

(73) Titulaire: **Radosavljevic, Milenko, 12 rue de Lorraine,
F-67100 Strasbourg (FR)**

(72) Inventeur: **Radosavljevic, Milenko, 12 rue de Lorraine,
F-67100 Strasbourg (FR)**

(74) Mandataire: **Nithardt, Roland, CABINET ROLAND
NITHARDT 2, rue du 17 Novembre, F-68100 Mulhouse
(FR)**

EP 0 153 263 B1

## Description

La présente invention concerne une serrure optoélectronique selon le préambule de la revendication 1. Une serrure de ce genre est décrite dans le US-A-2 953 689.

Dans la description ci-dessous, le terme serrure est utilisé au sens très large du mot pour désigner un dispositif à codeurs optoélectroniques de conception fort originale et simple grâce à sa nature physique. Elle permet une sécurité de protection d'accès à un espace ou à une machine, tout à fait exceptionnelle. Une telle sécurité est due à la capacité de la serrure de travailler simultanément en mode permissif normal, qui est le mode des serrures mécaniques classiques, et en mode conversationnel. Cette serrure peut recevoir des instructions de l'extérieur sous forme logique ou analogique, par câble, par voie téléphonique ou par voie hertzienne. Ainsi, un vaste champ d'application est ouvert dans le domaine de la protection d'accès à un espace ou à une machine, tant dans les industries du bâtiment, de l'automobile, des machines électriques ou électroniques, que des coffres-forts, etc..., la serrure optoélectronique pouvant apporter aux problèmes posés des solutions simples, efficaces, et souvent très originales. Dans bien des cas elle entre en compétition directe avec des serrures à cartes magnétiques par son rapport sécurité-prix de revient.

Le volume occupé par la serrure, réalisée sous forme intégrée, peut être très inférieur au volume d'une serrure mécanique classique. Son prix de revient peut devenir extrêmement intéressant grâce à la possibilité de la fabrication en série de la plus grande partie des codeurs.

Conformément à l'invention, la serrure optoélectronique, selon le préambule de la revendication 1, est caractérisée en ce que le codeur est constitué par un codeur des trois types suivants:

    (a) codeur permissif (figure 7),

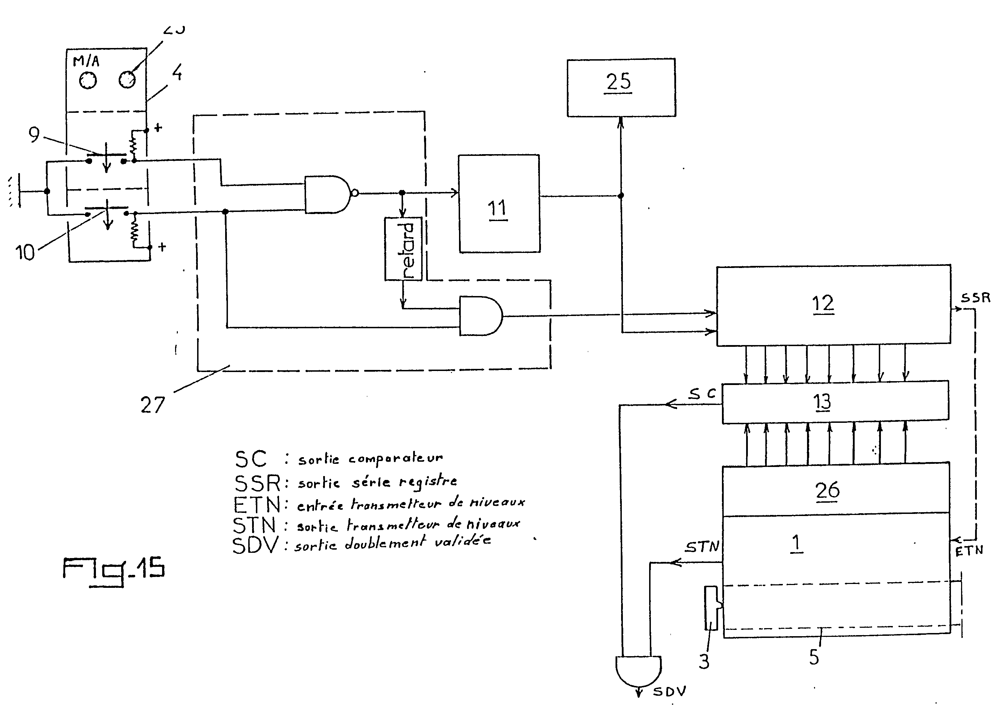

    (b) codeur permissif transmetteur de niveaux (figures 9 à 13),

    (c) codeur générateur de mots (figure 8),
ou par une combinaison d'un codeur de type (a) ou (b) avec un codeur de type (c), et en ce que ladite charge R est branchée en série avec au moins une partie des photorécepteurs.

Les codeurs permissif, permissif-transmetteur de niveaux, et générateur de mots sont des codeurs optoélectroniques constitués par un réseau de photocouples qui sont réalisés, d'une part, par un photo-émetteur unique ou par un réseau de photo-émetteurs, travaillant, par exemple, dans le domaine de l'infrarouge, et, d'autre part, par un réseau de photorécepteurs, tels que les photodiodes ou les phototransistors, entre autres. Seule la nature du réseau électrique reliant les photorécepteurs entre eux définit le type de codeur optoélectronique.

Le codeur permissif remplit le rôle permissif d'une serrure mécanique classique, tandis que le codeur générateur de mots permet d'individualiser une clé optique parmi plusieurs clés de la même serrure, chaque clé générant son mot propre.

Le codeur permissif transmetteur de niveaux est un codeur permissif auquel est associé un modulateur qui est un réseau simple et qui le rend capable, d'une part, de recevoir une suite de niveaux logiques ou analogiques à son entrée électrique, et, d'autre part, de transmettre ces mêmes niveaux, dans le même ordre ou dans un ordre différent vers sa sortie.

Un codeur à clavier permet de générer un code extérieur en mode logique et qui est appliqué à l'entrée du transmetteur de niveaux. Ce code extérieur peut représenter une instruction quelconque ou simplement exprimer la connaissance par l'usager de son code propre généré par la clé. Afin de simplifier au maximum l'ensemble de la serrure il est préconisé l'emploi d'un codeur à clavier à deux touches rendant ainsi le tout plus compact, plus fiable et moins onéreux. Il est évident que le codeur à clavier à deux touches conforme à l'invention peut remplacer avec profit dans bien d'autres usages un codeur à clavier normal. Le codeur à clavier peut enfin être remplacé par un modem si on veut appliquer au transmetteur de niveaux les niveaux analogiques.

Les codeurs ci-dessus ont pour rôle de permettre la réalisation des protocoles d'accès aussi complexes qu'on veut. Ceci explique l'exceptionnelle sécurité que procure une serrure à codeurs optoélectroniques.

L'ensemble des problèmes de protection d'accès correspond à deux grandes catégories de serrures, à savoir, les serrures à clé unique, et les serrures à clés individualisées multiples, et à chaque catégorie de serrures correspondent des organisations fonctionnelles spécifiques, qui, mises en lumière, facilitent le choix des structures adaptées.

Dans le cas d'une serrure à clé unique, la serrure en tant que dispositif permissif autorise une action en délivrant un signal, qui est un signal permissif, permettant ladite action de l'objet commandé. Suivant les conditions d'installation des liaisons matérielles, telles que câbles, entre l'organe de commande formé par la serrure et l'objet commandé, on peut distinguer deux structures fonctionnelles, à savoir une structure à liaison protégée des manipulations indésirables et une structure à liaison non protégée. Le premier cas concerne une serrure compacte, telle une serrure mécanique classique dans laquelle le transfert du signal permissif autorisant le déplacement du pêne dormant a lieu uniquement à l'intérieur du boîtier de la serrure, et donc à l'abri des manipulations. La structure fonctionnelle d'une telle serrure optoélectronique comprend alors un codeur permissif seul.

Dans le cas d'une liaison non protégée, il pourrait être possible, si des précautions particulières ne sont pas prises, d'autoriser, voire même de déclencher la commande d'une action, par manipulation de la liaison, comme par exemple dans le cas de la commande de démarrage d'un véhicule. En effet, il est possible de faire démarrer un véhicule sans clé de contact en accédant aux fils de commande. Ces manipulations peuvent être évitées si le signal permissif se présente sous forme codée. A cet effet, la structure fonctionnelle doit être constituée par un codeur permissif transmetteur de niveaux, et par un générateur d'un mot fixe, les deux étant contrôlés par une clé unique.

Dans le cas d'une serrure unique autorisant une commande individualisée d'accès multiples, chaque commande individualisée permettant l'accès à un élément parmi l'ensemble d'éléments individualisés, il est possible de réaliser, soit une commande directe par code individuel, soit une commande par code individuel vérifié.

Dans le premier cas, le code individuel est généré par la clé même, et le codeur permissif autorise ou non son acceptation. La structure fonctionnelle, dans ce cas, est composée d'un codeur permissif transmetteur de mots et d'un codeur générateur de mots ou d'une source de mots quelconque.

La commande par code individuel vérifié est une utilisation de la serrure en mode conversationnel qui correspond au mode d'utilisation d'une carte de crédit et sa structure fonctionnelle comprend un codeur permissif transmetteur de mots, un codeur générateur de mots et une source de mots extérieure à la serrue, tel qu'un codeur à clavier ou un modem.

L'ensemble des codeurs et deux exemples d'application concrète sont représentés par les dessins annexés, dans lesquels:

la figure 1 présente schématiquement la structure globale d'une serrure conforme à l'invention, sous forme des blocs fonctionnels;

la figure 2 montre un exemple de réalisation possible d'un codeur optoélectronique, le dessin étant simplifié;

la figure 3 représente l'un des aspects possibles d'une clé optoélectronique;

la figure 4 montre, de façon simplifiée, la vue en coupe d'une clé positionnée dans la serrure;

la figure 5 est un schéma de principe d'un circuit logique optoélectronique ET;

la figure 6 est un schéma de principe d'un circuit logique optoélectronique NON–OU;

la figure 7 est un schéma de principe d'un codeur optoélectronique permissif;

la figure 8 est un schéma de principe d'un codeur optoélectronique générateur de mots;

les figures 9 à 12 représentent quelques exemples d'associations parmi d'autres d'un réseau modulateur et d'un codeur permissif pour former un codeur permissif transmetteur de niveaux;

la figure 13 représente un exemple explicite d'un codeur permissif transmetteur de niveaux logiques;

la figure 14 représente un diagramme fonctionnel d'un codeur à clavier à deux touches;

la figure 15 représente un exemple concret d'un codeur à clavier à deux touches conformément à la figure 14, les niveaux logiques successifs étant générés de façon alternée, et

la figure 16 représente un exemple d'application concrète de la serrure optoélectronique à la commande protégée de démarrage d'une voiture automobile.

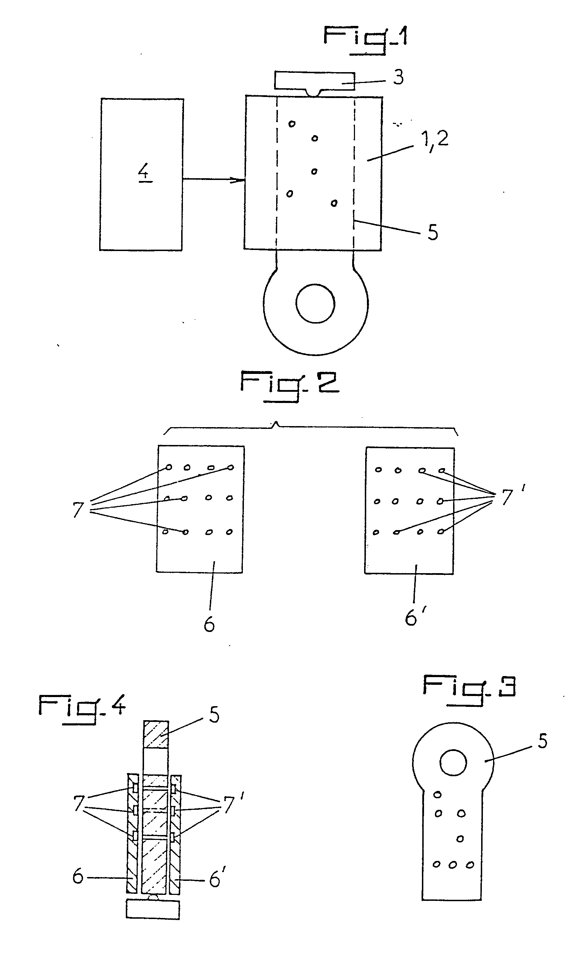

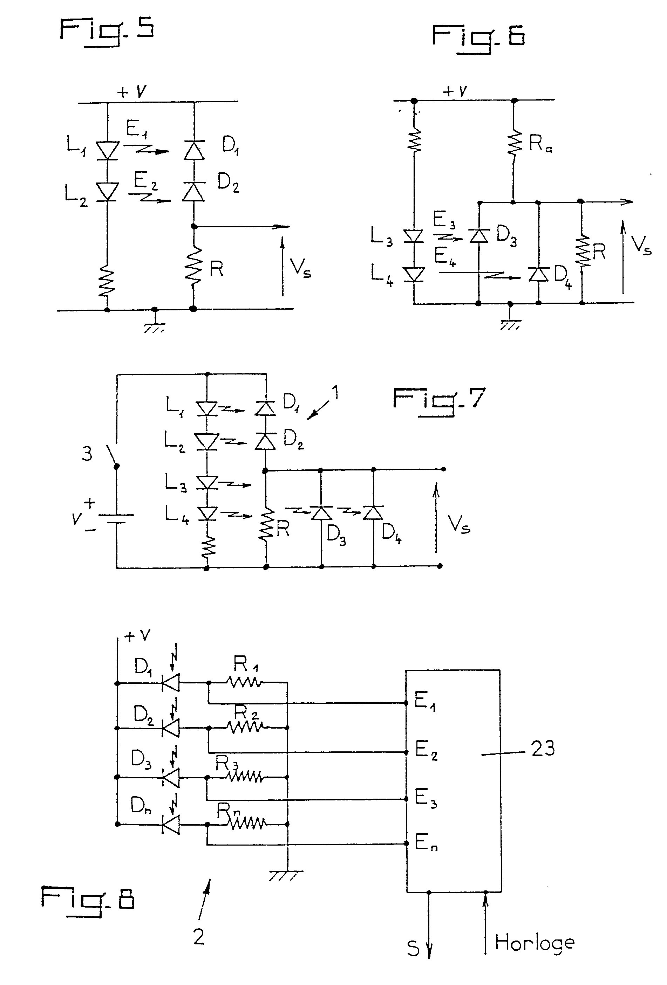

Conformément à l'invention, la figure 1 des dessins annexés montre plus particulièrement la structure globale d'une serrure optoélectronique complète. Les codeurs optiques permissif ou transmetteur de mots 1 et le générateur de mots 2 sont réalisés sous forme de circuits intégrés, les éléments optoélectroniques étant déposés sur les supports rigides communs 1. La clé 5 est introduite dans le codeur. A la fin de la course, elle enclenche un microrupteur 3 établissant ainsi l'alimentation électrique de l'ensemble. Un dispositif 4 extérieur à la serrure tel qu'un codeur à clavier ou un modem peut fournir un code extérieur de contrôle d'accès individualisé, qui, dans ce cas, est appliqué à l'entrée du transmetteur de niveaux.

Un codeur optoélectronique ne diffère d'un autre codeur que par la structure électrique des réseaux de photorécepteurs le constituant, leur présentation et leur réalisation technique étant identiques. Un tel codeur optoélectronique est essentiellement constitué, comme le montre la figure 2, par un ensemble de photocouples, qui, à titre d'exemple, peuvent être réalisés sur deux plaquettes supports 6–6' en matériau rigide. Ainsi, par des techniques des circuits intégrés on dépose, par exemple, sur l'une des plaquettes 6, un réseau de diodes photo-émettrices 7, tandis que sur l'autre support 6' est déposé un réseau de photodiodes ou phototransistors 7', l'ensemble ainsi réalisé travaillant, par exemple, dans le domaine de l'infrarouge. Les deux réseaux sont réalisés suivant une même disposition géométrique, arbitraire, mais restant fixe pour l'ensemble des codeurs. La figure 2 représente de tels réseaux suivant une disposition plane, la plus intéressante en raison de sa simplicité. L'ensemble des diodes photo-émettrices peut être remplacé par une seule source telle que la lumière du jour ou une source laser diffusant l'éclairement sur l'ensemble des photorécepteurs.

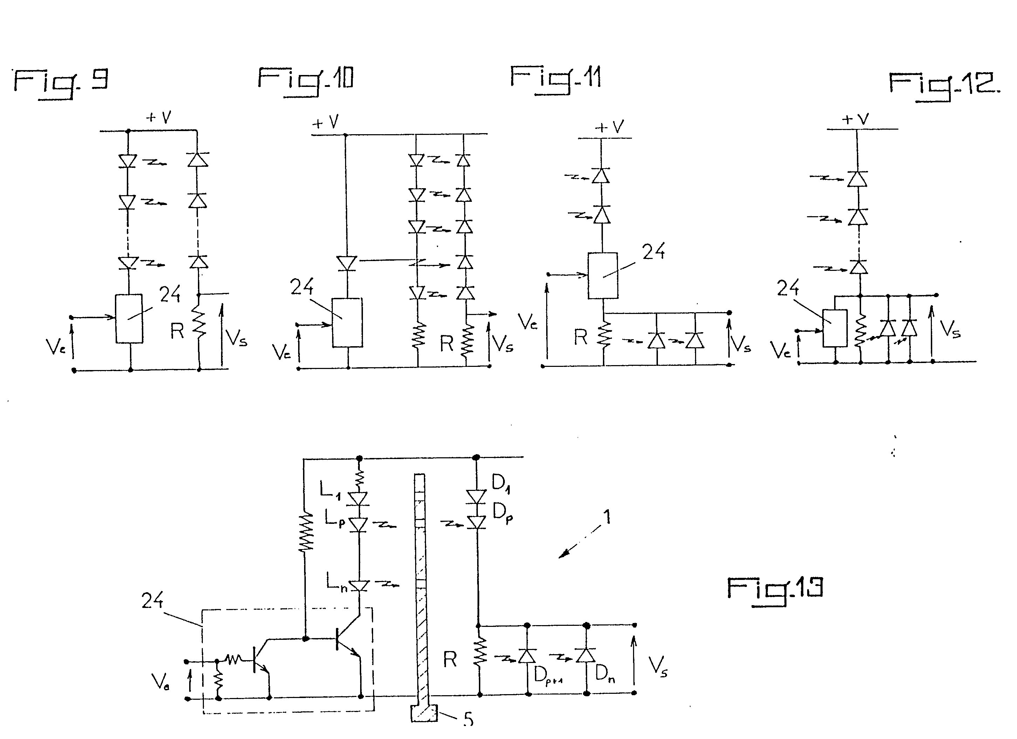

Les deux plaquettes supports 6–6' sont assemblées l'une face à l'autre de manière à former des photocouples. Un espace est prévu entre les deux plaquettes dans lequel se place la clé optique 5 (figure 4). Cette dernière est perforée à des endroits précis (figure 3) pour permettre l'éclairement de certains photorécepteurs 7', tout en obturant les autres, suivant le réseau de photorécepteurs 7'. Si la clé optique 5 correspond à la configuration électrique du codeur, ledit codeur délivre un niveau ou une suite de niveaux électriques à sa sortie.

Le codeur à code permissif est l'élément fondamental de la serrure, du fait que tout processus se produisant au sein de la serrure est sous son contrôle. Un tel codeur est basé sur les circuits de logique optoélectronique pure développés à la suite de la thèse de doctorat de spécialité soutenue par l'inventeur et ayant pour thème: «Sources analogiques de courant à photodiodes P.I.N.» (juin 1975 Strasbourg). Il s'agit de circuits de logique réalisés uniquement par des photocouples.

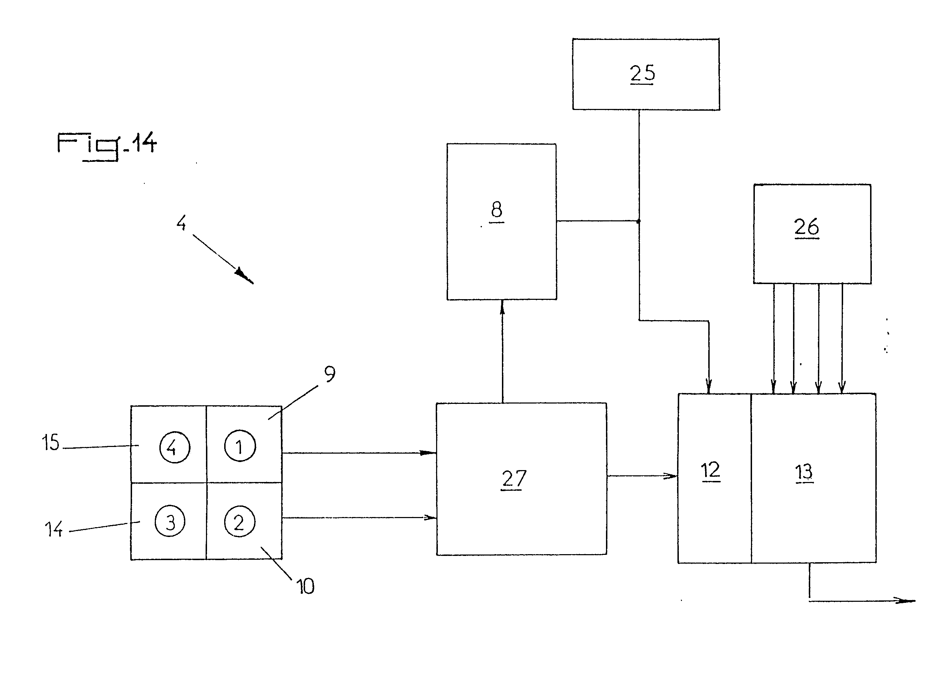

Le codeur permissif est une combinaison de deux des circuits logiques de base, qui sont représentés par les figures 5 et 6.

La figure 5 représente un circuit logique ET, et la figure 6 représente un circuit logique NON–OU.

En désignant par $L_i$ la $i^{ème}$ source de lumière, en cas de sources multiples, telle qu'une diode photo-émettrice (LED), une source laser ou la lumière du jour, par exemple, par $D_i$ le photorécepteur correspondant, tel qu'une photodiode ou un phototransistor, recevant un éclairement $E_i$, la valeur logique S relative à la différence de potentiel $V_S$ aux bornes de la charge R est liée aux éclairements $E_i$ par:

$S = E_1 \times E_2$ dans le cas d'un circuit ET (figure 5), et

$S = \overline{E_3} \times \overline{E_4} = \overline{E_3 + E_4}$, dans le cas d'un circuit NON–OU. On a plus généralement, respectivement:

$S = E_1 \times E_2 \times ... \times E_n$ (circuit ET), et
$S = \overline{E_1 + E_2 + ... + E_n}$ (circuit NON–OU)

pour n photorécepteurs, une seule source de lumière pouvant, par contre, être suffisante pour éclairer l'ensemble de photorécepteurs.

Les relations ci-dessus démontrent que toutes les photodiodes ou phototransistors en série avec la charge R doivent être éclairées, et inversement, que toutes les photodiodes en parallèle avec la charge doivent rester dans l'obscurité pour avoir un niveau haut aux bornes de la charge R.

En remplaçant la résistance additionnelle $R_a$ de la figure 6 par les photorécepteurs en série avec la charge résistive R de la figure 5 on réalise un codeur permissif 1 suivant le schéma de principe de la figure 7.

La charge peut être résistive, selfique ou capacitive ou de nature plus complexe, et on peut recueillir à son niveau un signal permissif sous forme d'un courant la traversant, ou sous forme d'une différence de potentiel à ses bornes.

La structure de réseau d'un tel codeur se traduit par la relation logique générale:
$S = E_1 \times E_2 \times ... \times E_p \times \overline{E_{p+1}} \times \overline{E_{p+2}} \times ... \times \overline{E_{p+n}}$

Si un seul parmi les n photorécepteurs n'est pas dans des conditions d'éclairement définies par la relation ci-dessus, la sortie est au niveau logique bas, par exemple. La clé optique 5, placée entre les sources de lumière et les photorécepteurs, a pour rôle d'obturer les photorécepteurs en parallèle sur la charge R, afin qu'ils restent dans l'obscurité et de permettre l'éclairement des photorécepteurs en série avec la charge R. Ceci est rendu possible par les perforations de la clé aux endroits définis.

Si n est le nombre total de photorécepteurs, le nombre de combinaisons logiques C que permet le réseau suivant la figure 7 est: $C = 2^n$.

Ainsi, pour n = 20 on obtient C = 1 048 580, d'où l'intérêt particulier représenté par le codeur permissif.

Un microrupteur 3 incorporé au codeur est actionné par la clé 5 lors de son introduction complète dans le codeur 1. Ainsi, au repos le codeur ne consomme pas de courant mais, et surtout, on évite que les états transitoires, lors de l'introduction de la clé 5, deviennent parfois actifs. L'identification du code complet se fait ainsi seulement lorsque la clé 5 est bien en place.

Le codeur générateur de mots 2, dont le schéma de principe est représenté par la figure 8, a pour rôle de générer un mot logique à partir d'une clé optique 5 perforée, qui définit le mot, la structure du réseau électrique étant fixe. Suivant que le photorécepteur $D_i$ est éclairé ou non, le niveau logique aux bornes de sa charge $R_i$ est haut ou bas. Un registre 23, par exemple, à entrée parallèle, transfère l'ensemble de ces niveaux vers sa sortie série. L'originalité de ce codeur 2, par rapport au lecteur optique classique, n'est pas au niveau du réseau, mais est au niveau du mode de lecture, cette dernière se faisant suivant un plan délimité par la surface active de la clé 5, et dans lequel sont situés les photorécepteurs, et non suivant une rangée comme dans le cas d'un lecteur optique clasique. D'autre part, l'emploi de ce codeur dans le domaine de la serrure, présente son deuxième aspect original.

La clé optique 5 peut prendre des formes géométriques quelconques et être constituée en un matériau quelconque. En particulier, elle peut se présenter sous forme d'une carte magnétique de crédit. La surface active totale de la clé peut être divisée en zones fonctionnelles, séparées telle qu'une zone où les perforations correspondent uniquement au codeur permissif 1 et une zone où les perforations correspondent au codeur générateur de mots 2. Ces zones peuvent aussi être imbriquées ou confondues. Une zone à fonction spécifique peut être à son tour divisée en sous-zones destinées à une utilisation partielle de zone complète, afin de simplifier la réalisation des serrures supplémentaires à la serrure principale et d'importance secondaire. La sous-zone peut avoir la même spécificité fonctionnelle ou non que la zone qui la sous-tend.

En considérant le réseau d'un codeur permissif, il apparaît que, si le code permissif de la clé optique est correct, un courant I traverse la charge R, et à ce courant correspond une différence de potentiel aux bornes de R. Cette différence de potentiel $V_S$ peut être modulée si on module le courant I. A cet effet, il suffit de moduler l'éclairement d'un des photorécepteurs quelconques, ou de l'ensemble des photorécepteurs, en modulant le courant d'une source photo-émettrice ou de l'ensemble des sources photo-émettrices. A cet effet, on peut insérer un réseau série 24 suivant les figures 9 et 10 à l'entrée duquel on applique un signal de commande $V_e$. Il en est de même si dans l'une des deux branches de photorécepteurs on insère un réseau analogue 24 capable de moduler le courant de la branche utilisée, et si on lui applique des signaux de commande adéquats (figures 11 et 12).

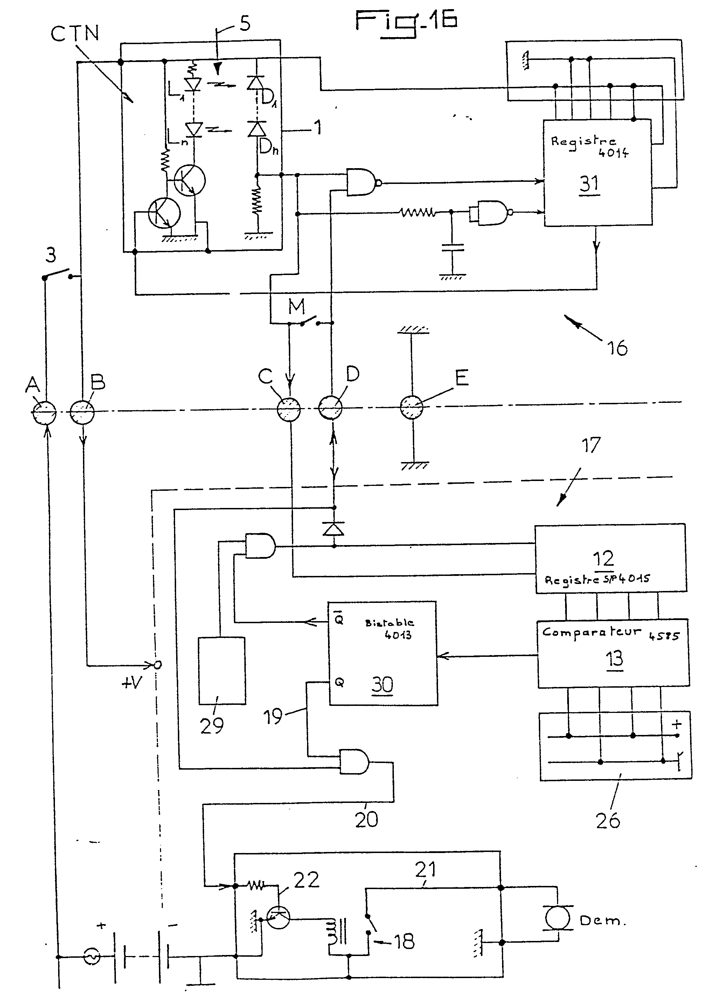

La figure 13 représente, à titre d'exemple concret, un schéma simple d'un codeur permissif transmetteur de niveaux logiques 1. Dans un tel codeur, la différence de potentiel $V_S$ peut être directement proportionnelle au signal de commande $V_e$, le codeur se présentant alors comme un transmetteur de niveaux analogiques. Par contre, si, comme c'est le cas de la figure 13, la transmission s'effectue par tout ou rien, il s'agit d'un transmetteur de niveaux logiques, et on a, dans le cas de la figure, la relation: $V_S = \overline{V_e}$. La transmission de niveaux ne peut se faire que si le code optique de la clé 5, représenté symboliquement sur la figure 13, est correct, de sorte que le transfert de niveaux n'est autorisé qu'avec utilisation de la clé convenable.

Le codeur à clavier à deux touches 4 (figures 14 et 15) est destiné à remplacer un codeur à clavier normal. Ce codeur 4 est prévu pour l'utilisation de la serrure en mode conversationnel, en vue d'une identification du possesseur de la clé. Un tel codeur 4 présente une structure simplifiée tout en gardant une capacité de codage comparable à celle d'un clavier normal. Un tel codeur 4 est constitué, dans son principe, par un générateur de niveaux logiques 8, par un clavier à deux touches 9, 10, par un dispositif 25 de matérialisation des niveaux issus de 8, par un réseau logique 27 de gestion de ces niveaux logiques disponibles à la sortie du générateur 8, ainsi que par un registre 12 où sont stockés les niveaux choisis formant le mot clé, dont la structure dépend de l'ordre dans lequel se fait la pression sur les touches 9 et 10. Un comparateur 13 compare le mot issu du registre 12 aux mots de référence contenus dans une source de mots 26 telle que, par exemple, un ensemble de registres. Evidemment les éléments 12, 13 et 26 peuvent faire partie d'un microprocesseur, l'élément 26 étant, par exemple, une MEM (ROM). L'ensemble fonctionne de la manière suivante: chaque pression sur une des deux touches 9 et 10 provoque un changement ou non du niveau logique de sortie du générateur 8 suivant une suite de niveaux logique aléatoire ou préétablie. Le dispositif 25 matérialise ces niveaux sous forme sonore ou visuelle. De la nature du niveau dépend le choix de la touche à presser 9, 10. Une des touches prend en compte le niveau choisi pour la formation du mot complet, l'autre touche élimine le niveau correspondant. Chaque pression génère simultanément le niveau suivant à la sortie du générateur de niveaux 8. La prise en compte ou l'élimination sont décidées au niveau du réseau logique 27 suivant la touche pressée en fonction de la nature du niveau matérialisé. Tous les niveaux logiques pris en compte sont stockés dans le même ordre dans le registre série parallèle 12 afin d'être comparés par le comparateur 13 aux mots de référence contenus dans la source de mots 26. A la coïncidence des mots comparés, le comparateur délivre un niveau déterminé signifiant l'acceptation du mot codé sur le clavier. Le cas le plus simple de génération de niveaux est celui où à chaque pression d'une des deux touches, les niveaux alternent. Dans ce cas, la matérialisation des niveaux est superflue et le codage du mot se trouve simplifié. Ce codage s'exprime par deux chiffres décimaux, par exemple 1 et 2, le chiffre 1 signifiant, par exemple, l'acceptation du niveau et correspondant à la touche numérotée 1 et le chiffre 2 l'élimination du même niveau et correspondant à la touche numérotée 2. L'utilisateur doit connaître la suite décimale, par exemple 11212212 pour un mot de huit niveaux successifs et ignorer leur signification. Ceci veut dire, qu'arrivant dans l'ordre à la sortie du générateur de niveaux, ici dans l'hypothèse des niveaux alternés, un bistable peut remplir ce rôle, le 1er, 2ème, 4ème et 7ème niveaux sont acceptés d'après la convention précitée, le 3ème, 5ème, 6ème et 8ème niveaux étant refusés.

Il en résulte que le mot codé stocké dans le registre est un mot de 4 bits puisque quatre niveaux sont acceptés et transmis au registre. Le premier niveau à la mise sous tension du clavier et de la serrure doit être toujours un même niveau de départ. Si, par exemple, ce premier niveau, dans le cas présent, est un niveau bas et, en tenant compte du fait que les niveaux à la sortie du générateur 8 alternent, alors le mot en mémoire est un mot composé des niveaux successifs BHHB qu'on peut déduire par le tableau de correspondance ci-dessous.

| 1 | 1 | 2 | 1 | 2 | 2 | 1 | 2 |
|---|---|---|---|---|---|---|---|
| B | H | B | H | B | H | B | H |
| ↓ | ↓ |   | ↓ |   |   | ↓ |   |
| B | H |   | H |   |   | B |   |

Le codage peut être rendu plus complexe, sans modification des circuits électriques du codeur 4, en complétant le clavier à deux touches par des touches factices supplémentaires, 14, 15, dont le nombre peut être supérieur à deux, reliées ou non chacune à l'une des deux touches principales 9 et 10. Ainsi, toutes les touches deviennent actives et permettent d'exprimer le code par plusieurs chiffres, bien que la pression sur une touche factice 14, 15 corresponde à la pression sur l'une des touches principales 9, 10.

En prenant comme exemple un clavier à quatre touches dont deux factices, on peut associer à chaque touche un chiffre 1 à 4. En supposant que les touches des chiffres pairs et celles des chiffres impairs soient reliées électriquement deux à deux, il s'ensuit qu'un code peut être exprimé de plusieurs manières, de sorte que les codes suivants sont équivalents:

(a) 1121221 – touches principales 9 et 10 uniquement

(b) 1341243
(c) 3121421 – avec les touches factices 14 et 15

Bien entendu, l'utilisateur doit ignorer la signification des chiffres, c'est-à-dire la manière dont les touches factices 14 et 15 sont reliées à l'intérieur du clavier aux touches principales 9 et 10, en disposant uniquement du code chiffré, qui lui indique les touches à actionner pour confirmer son code personnel.

La structure fonctionnelle générale d'un codeur à clavier est représentée par la figure 14 et un exemple d'application concret d'un codeur 4 associé à la serrure optoélectronique et représenté par la figure 15.

La figure 16 est le schéma explicite donné à titre d'exemple d'une application de la serrure à codeur transmetteur de niveaux (CTN) dans l'industrie automobile. Il représente la commande de démarrage d'une voiture automobile. A l'introduction de la clé optique 5 dans la serrure, l'interrupteur 3 établit l'alimentation de l'ensemble électronique. Le codeur permissif, par l'intermédiaire de la clé 5 autorise la transmission de l'entrée vers la sortie du codeur transmetteur de niveaux, du mot contenu dans le registre 31 préprogrammé en autorisant au rythme de l'horloge 29 la transmission des niveaux successifs. Le registre série parallèle 12 accepte le mot que le comparateur 13 compare au mot consigné 26. A l'identité établie le comparateur 13 fait basculer le bistable 30, qui, à son tour, autorise le démarrage (en tournant la clé) par l'intermédiaire de l'interrupteur M. Cette dernière opération est, en fait, inutile, mais elle est ici prévue pour ne pas changer les habitudes de l'usager. Il est à remarquer, d'une part, que le volume réel de la serrure ne doit pas dépasser le volume de la serrure mécanique classique tout en permettant d'autres protections et commandes simultanées. De même la partie récepteur pourrait se présenter sous forme d'un seul circuit intégré compact de taille d'un circuit intégré DIL à 14 broches. D'autre part, l'ensemble assure une protection quasi absolue de la voiture grâce au codeur optique inviolable, mais aussi grâce au fait que les fils de liaison entre la serrure et le récepteur sont électriquement inactifs et sans conséquences aux courts-circuits qui pourraient avoir lieu hormis le court-circuit entre le pôle positif et la masse. La protection contre le vol est pratiquement sans faille si les lignes 19, 20, 21 et 22 restent difficilement accessibles aux manipulations indésirables. Dans ce schéma, le nombre de fils de liaison ABCD qui est de quatre, si on tient compte que la liaison de la masse E est réalisée par la carrosserie de la voiture, est un nombre minimal possible. Etant donné que les courants transmis par ces fils sont de l'ordre d'une dizaine de mA, la liaison peut donc être réalisée à l'aide d'un câble à quatre fils de faible diamètre.

Il est à remarquer que dans le schéma de la figure 16, on a employé le registre 31 comme une source de mot de référence, afin de rendre plus clair le fonctionnement de l'ensemble, mais il est évident que le codeur optoélectronique générateur de mot peut remplir ce rôle, tout en simplifiant le même schéma. Ainsi le code permissif et le mot de référence sont générés simultanément par la même clé.

**Revendications**

1. Serrure optoélectronique comportant au moins une clé optique amovible (5), un codeur optoélectronique (1, 2) destiné à coopérer avec cette clé et un microrupteur (3) commandant l'alimentation électrique du codeur, et actionné mécaniquement par la clé, la clé comportant un réseau de passages optiques qui la traversent, et le codeur comportant un réseau de sources d'éclairement (7), un réseau de photorécepteurs (7') disposés en regard des sources d'éclairement et séparés d'elles par un logement prévu pour la clé, et au moins une charge (R) associée au réseau de photorécepteurs et au niveau de laquelle on recueille un signal électrique de sortie, caractérisée en ce que le codeur (1, 2) est constitué par un codeur des types suivants:

(a) codeur permissif (1, figure 7),

(b) codeur permissif transmetteur de niveaux (1, figures 9 à 13),

(c) codeur générateur de mots (2, figure 8), ou par une combinaison d'un codeur de type (a) ou (b) avec un codeur de type (c), et en ce que ladite charge (R) est branchée en série avec au moins une partie des photorécepteurs (7', Dl....Dn).

2. Serrure selon la revendication 1, caractérisée en ce que le codeur permissif (1) comporte un circuit logique ET optoélectronique à plusieurs entrées optiques, composé de plusieurs des photorécepteurs (D1, D2) branchés en série entre eux et en série avec la charge (R), et un circuit logique NON OU optoélectronique à plusieurs entrées optiques composé d'autres photorécepteurs (D3, D4) branchés en parallèle entre eux et en parallèle à la charge (R).

3. Serrure selon la revendication 2, caractérisée en ce que le codeur permissif transmetteur de niveaux est un codeur permissif (1) auquel on associe un réseau modulateur (24) raccordé à au moins une des sources d'éclairement ou à au moins un des circuits logiques, de manière à moduler le signal de sortie du codeur permissif, un signal de commande étant appliqué à l'entrée du modulateur (24) et se retrouvant sous une forme correspondante à la sortie du codeur permissif.

4. Serrure selon la revendication 3, caractérisée en ce que l'entrée du modulateur (24) est raccordée à un codeur à clavier ou à un modem agencé pour recevoir des informations extérieures par câble ou par voie hertzienne.

5. Serrure selon l'une quelconque des revendications précédentes, caractérisée en ce que le codeur générateur de mots (2) comporte un groupe de sources d'éclairement (7) disposées dans un plan (6), et un même nombre de photorécepteurs (7') disposés dans un plan parallèle (6'), l'ensemble formant n photocouples, la clé (5) pouvant être introduite entre les sources (7) et les photorécepteurs (7') en rendant actifs certains photocouples, chaque photorécepteur (7') possédant sa charge propre dans laquelle il débite un courant s'il est éclairé, l'ensemble des niveaux aux bornes de l'ensemble des charges définissant un mot logique dont la structure dépend de la disposition géométrique des passages optiques de la clé (5), et en ce que chaque charge résistive est reliée à une des entrées d'un registre à décalage (23) à entrée parallèle et sortie série, le mot logique étant recueilli à la sortie série du registre (23) sous la forme d'une suite de niveaux logiques qui se succèdent dans le temps.

6. Serrure selon l'une quelconque des revendications précédentes, caractérisée en ce que le codeur comprend en outre un codeur à clavier à deux touches (4) constitué, d'une part, par un clavier à deux touches (9, 10) muni ou non de touches factices (14, 15) et, d'autre part, par un ensemble électronique comprenant un générateur de niveaux (8), un dispositif de matérialisation visuelle ou sonore (25) des niveaux issus du générateur (8), une logique (27) de prise en compte ou non des niveaux générés par le générateur (8), et dont la commande est réalisée par le clavier à deux touches (9, 10), un registre de stockage (12) des niveaux successifs pris en compte, une source de mots de référence (26) et un comparateur (13) comparant le mot stocké dans le registre (12) à un des modes de référence issu de la source de mots (26) et délivrant une impulsions en cas de coïncidence des deux mots comparés.

7. Serrure selon l'une des revendications précédentes, caractérisée en ce que les passages optiques de la clé (5) sont répartis sur une surface dite active qui comprend différentes zones fonctionnelles correspondant respectivement à au moins deux codeurs de types différents (1, 2), et en ce que ces zones fonctionnelles sont au moins partiellement imbriquées.

**Claims**

1. Lock with optoelectronic coders, comprising at least a removable optical key (5), an optoelectronic coder (1, 2) to be associated with said key and a microinterrupter (3) to control the electrical supply to the coder, and actuated by the key, said key having a network of perforations, and the coder comprising a network of sources of illumination (7), a network of photoreceivers (7') disposed opposite to housing and separated from the photo-emitters by a housing for the key, and at least one load (R) associated to the photoreceivers network in the level of which an electrical outpout signal is read, characterised in that the coder (1, 2) comprises one coder of the following type:
   a) a permissive coder (1, figure 7),
   b) a level transmitter permissive coder (1, figures 9 to 13),
   c) a word generator coder (2, figure 8),
or a combination of a coder of type (a) or (b) with a coder of type (c), and in that the load R is branched in serie with at least one part of the photoreceivers (7', Dl....Dn).

2. Lock according to claim 1, characterised in that the permissive coder (1) comprises a logical optoelectronical AND circuit having several optical inlets, formed by several of the photoreceivers (D1, D2) branched in series between them and with the load, and a logical optoelectronical NO-OR circuit having several optical inlet and formed by other photoreceivers (D3, D4) branched in parallel between them and with the load (R).

3. A lock according to claim 2 characterised in that the level transmitter permissive coder is a permissive coder (1) to which is associated a modulator network (24) connected to a least one of the light sources or to at least one of the logic circuits to modulate the output signal of the permissive coder, a command signal being applied to the imput of the modulator (24) and found in the same form at the output of the permissive coder.

4. A lock according to claim 3, characterised in that the imput of the modern modulator (24) ist connected to a keyboard coder or to a permitting it to receive external information by cable or by radio.

5. A lock according to any one of claims 1 to 4, characterised in that the word generator coder (2) comprises n sources of illumination (7) disposed in a plane (6), and n photoreceivers (7') disposed in a parallel plane (6'), the unit forming n photocouples, the key (5) being capable of being introduced between the photoemitters (7) and the photoreceivers (7') making certain photocouples active, each photoreceivers (7') having its own load, in which it delivers a current if it is illuminated, the set of electronic levels at the terminals of the set of loads defining a logical word, the structure of which depends on the geometrical arrangement of the perforations of the keys (5), and in that each resistive load is connected to one of the inputs of a shift register (23) with parallel inputs and series outputs, the logical word being read at the series output of the register (23) in the form of a set of logical levels.

6. A lock according to any one of claims 1 to 5, characterised in that the board coder comprises a two-key keyboard coder (4) formed on the one hand by a two-key keyboard (9, 10), having or not dummy keys (14, 15) and on the other hand, by an electronic unit comprising a level generator (8), a visual or sound materialisation device (25) of levels from the generator (8), a logical network (27) taking or not into consideration levels generated by the generator (8), and controled by the two-keys keyboard (9, 10), a register (12) storing successive levels taken into consideration, a reference word source (26) and an comparator (13) comparing the word stored in the register (12) with one of the reference mode from the source (26) and issuing an impulse if there is coincidence of the two words compared.

7. A lock according to any one of claims 1 to 6, characterised in that the perforations on the key (5) are disposed on a surface called active surface divided into different functionnal zones corresponding respectively to at least two coders of different type (1, 2) and in that said functionnal zones are at least partly overlapped.

**Patentansprüche**

1. Aus mindestens einem einsteck- und abziehbaren optischen Schlüssel (5), einem mit diesem zusammen wirkenden opto-elektronischem Codierer (Wandler) (1, 2) und einem den Codierer (1, 2) mit elektrischer Energie versorgenden, vom optischen Schlüssel (5) mechanisch betätigten Mikro-Schalter (3) bestehendes opto-elektronisches Schloss, wobei der Schlüssel (5) eine Mehrzahl von optischen Durchgängen aufweist, wobei der Codierer (1, 2) einerseits eine Mehrzahl von Lichtquellen (7) und andererseits eine Mehrzahl von Photoempfängern (7') aufweist, die im Abstand zueinander, einander gegenüberliegend angeordnet sind, wobei der dem Abstand entsprechende Spalt zum Einstecken des Schlüssels (5) dient, und wobei den Photoempfängern (7') mindestens eine elektrische Last (R) zugeordnet ist, an der ein dem Potential der Photoempfänger entsprechendes elektrisches Ausgangssignal ansteht, dadurch gekennzeichnet, dass der Codierer (1, 2) als

a) nach Art eines mechanischen Schlüssels wirkender Zugriffs-Codierer (1, Fig. 7)

b) mit einem Modulator zusammen arbeitender Signal-Pegelumsetzer (1, Fig. 9 bis 13)

c) mit einem individualisiertem optischen Schlüssel (5) Korrespondierender Wort-Codierer (2, Fig. 8), oder

als Kombination eines Zugriffs-Codierers oder eines Signal-Pegelsetzers mit einem Wort-Codierer ausgebildet ist, und dass die elektrische Last (R) mit mindestens einem Teil der Photoempfänger (7', D1...Dn) in Serie geschaltet ist.

2. Opto-elektronisches Schloss nach Anspruch 1, dadurch gekennzeichnet, dass der Zugriffs-Codierer (1) einen opto-elektronischen logischen Eingangsschaltkreis mit einer Mehrzahl optischer Eingänge aufweist, wobei der Eingangsschaltkreis eine Mehrzahl von Photoempfängern (D1, D2) aufweist, die untereinander und mit der elektrischen Last (R) in Serie geschaltet sind, und dass ein opto-elektronischer logischer NICHT ODER (NOR-) Schaltkreis mit einer Mehrzahl optischer Eingänge vorgesehen ist, der aus weiteren untereinander und mit der elektrischen Last (R) parallel geschalteten Photoempfängern (D3, D4) besteht.

3. Opto-elektronisches Schloss nach Anspruch 2, dadurch gekennzeichnet, dass der Signal-Pegelumsetzer (1) ein mit einem Modulator gekoppelter Zugriffs-Codierer (1) ist, der mit mindestens einer der Lichtquellen oder mindestens einem der logischen Schaltkreise verbunden ist, um das Ausgangssignal des Zugriffs-Codierers umzuwandeln, damit am Eingang des Modulators (24) ein Steuersignal ansteht, das in korrespondierender Form am Ausgang des Zugriff-Codierers abnehmbar ist.

4. Opto-elektronisches Schloss nach Anspruch 3, dadurch gekennzeichnet, dass der Eingang des Modulators (24) mit einer Coder-Tastatur oder einem Modem verbunden ist, so dass Informationen von aussen über Kabel oder in Form elektromagnetischer Wellen eingegeben werden können.

5. Opto-elektronisches Schloss nach einem der Ansprüche 1–4, dadurch gekennzeichnet, dass der Wort-Codierer (2) eine Mehrzahl von in einer Ebene (6) angeordneten Lichtquellen (7) und eine gleiche Anzahl von in einer parallelen Ebene (6') angeordneten Photoempfängern (7') aufweist, so dass eine aus n Lichtschaltern bestehende Schaltungsanordnung entsteht, wobei der optische Schlüssel (5) zwischen die Lichtquellen (7) und die Photoempfänger (7') einführbar ist, um vorgegebene Lichtschalter zu aktivieren, wobei jedem Photoempfänger (7') eine eigene elektrische Last zugeordnet ist, in der ein Stromfluss initiiert wird, wenn der entsprechende Photoempfänger belichtet wird, und wobei die Spannungswerte an den Ausgangsanschlüssen der elektrischen Lasten ein binär codiertes Wort definieren, das seinerseits von der Struktur der geometrischen Anordnung der optischen Durchgänge des optischen Schlüssels (5) abhängt, und dass jede elektrische Last mit je einem Eingang eines Schieberegisters (23) verbunden ist, so dass das binär codierte Wort am Ausgang des Schieberegisters (23) seriell in Form einer logischen Impulsfolge auslesbar ist.

6. Opto-elektronisches Schloss nach einem der Ansprüche 1–5, dadurch gekennzeichnet, dass der Codierer zusätzlich einen Codierer mit einer Tastatur mit zwei Tasten (4) aufweist, die einerseits mit einer Tastatur mit zwei Tasten (9, 10) mit ggf. zusätzlichen Tasten (14, 15) ausgestattet ist, und die andererseits einen elektronischen Schaltkreis mit einem Pegelgenerator (8), einen Bild- oder Akustik-Generator zur Anzeige der am Pegelgenerator (8) anstehenden Spannungswerte, eine logische Auswahl-Schaltung (27) zur Auswahl der am Pegelgenerator (8) anstehenden Spannungswerte, die mittels eines über die Tastatur mit den zwei Tasten (9, 10) generierten Ansteuersignals angesteuert wird, ein Speicherregister (12) zur Zwischenspeicherung der seriell ankommenden Pegelwerte, eine Quelle für Referenzworte (26) und einen Komparator (13) zum Vergleich des im Speicherregister (12) zwischengespeicherten und des von der Referenzwort-Quelle (26) ausgehenden Worts aufweist, wobei im Falle der Übereinstimmung der beiden Worte ein (Freigabe-) Impuls abgegeben wird.

7. Opto-elektronisches Schloss nach einem der Ansprüche 1–6, dadurch gekennzeichnet, dass die optischen Durchgänge des optischen Schlüssels (5) so über eine Fläche verteilt sind, dass funktionelle unterschiedliche Bereiche entstehen, die mit mindestens zwei Codierern (1, 2) unterschiedlichen Typs korrespondieren, und dass die funktionell unterschiedlichen Bereiche sich mindestens teilweise überlappen.

Fig.1

Fig.2

Fig.4

Fig.3

# Fig. 5

$+V$

$L_1$ $E_1$ $D_1$

$L_2$ $E_2$ $D_2$

$R$ $V_s$

# Fig. 6

$+V$

$R_a$

$L_3$ $E_3$ $D_3$

$E_4$ $R$ $V_s$

$L_4$ $D_4$

# Fig. 7

$L_1$ $D_1$ 1

$L_2$ $D_2$

3 $L_3$

$V$ $+$ $-$ $L_4$ $R$ $D_3$ $D_4$ $V_s$

# Fig. 8

$+V$

$D_1$ $R_1$ $E_1$

$D_2$ $R_2$ $E_2$ 23

$D_3$ $R_3$ $E_3$

$D_n$ $R_n$ $E_n$

2

S Horloge

EP 0 153 263 B1

Fig. 9

Fig. 10

Fig. 11

Fig. 12.

Fig. 13

+ V

+ V

+ V

+ V

24

24

24

24

24

R

R

R

R

R

$V_e$

$V_e$

$V_e$

$V_e$

$V_a$

$V_s$

$V_s$

$V_s$

$V_s$

$V_s$

$L_1$

$L_p$

$L_n$

$D_1$

$D_p$

$D_{p+1}$

$D_n$

1

5

Fig.14

EP 0 153 263 B1

SC : sortie comparateur
SSR: sortie série registre
ETN: entrée transmetteur de niveaux
STN: sortie transmetteur de niveaux
SDV: sortie doublement validée

Fig.15

# Fig.16